(19) Europäisches Patentamt
European Patent Office
Office européen des brevets

(11)  EP 2 967 042 B1

## (12)  EUROPEAN PATENT SPECIFICATION

(45) Date of publication and mention
of the grant of the patent:
**03.01.2018 Bulletin 2018/01**

(21) Application number: **14719580.4**

(22) Date of filing: **14.03.2014**

(51) Int Cl.:
*A01N 37/02* (2006.01)     *A01N 37/10* (2006.01)
*A01N 37/36* (2006.01)     *A01N 59/00* (2006.01)
*A01P 1/00* (2006.01)      *A61L 2/18* (2006.01)
*C02F 1/76* (2006.01)

(86) International application number:
**PCT/US2014/027488**

(87) International publication number:
**WO 2014/152572 (25.09.2014 Gazette 2014/39)**

(54) **THE USE OF SYNERGISTIC BLENDS OF ANTIMICROBIALS FOR CONTROLLING MICROORGANISMS IN INDUSTRIAL PROCESSES**

VERWENDUNG VON SYNERGISTISCHEN MISCHUNGEN VON ANTIMIKROBIELLEN WIRKSTOFFEN ZUR BEKÄMPFUNG VON MIKROORGANISMEN IN INDUSTRIELLEN PROZESSEN

UTILISATION DES MÉLANGES SYNERGIQUES D'ANTIMICROBIENS POUR LE CONTRÔLE DE MICRO-ORGANISMES DANS DES PROCÉDÉS INDUSTRIELS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2013 US 201361790095 P**

(43) Date of publication of application:
**20.01.2016 Bulletin 2016/03**

(73) Proprietor: **Solenis Technologies Cayman, L.P.
8200 Schaffhausen (CH)**

(72) Inventors:
• **CONSALO, Corinne, E.
New Castle, DE 19720 (US)**
• **CHAPMAN, John, S.
Lincoln University, PA 19352 (US)**

(74) Representative: **LKGLOBAL
Lorenz & Kopf PartG mbB Patentanwälte
Brienner Straße 11
80333 München (DE)**

(56) References cited:
**WO-A2-2007/149450     US-A- 5 165 910
US-A- 6 071 483        US-A1- 2002 053 657
US-A1- 2004 231 977**

• **KIM H ET AL: "Production and stability of chlorine dioxide in organic acid solutions as affected by pH, type of acid, and concentration of sodium chlorite, and its effectiveness in inactivating Bacillus cereus spores", FOOD MICROBIOLOGY, ACADEMIC PRESS LTD, LONDON, GB, vol. 25, no. 8, 1 December 2008 (2008-12-01), pages 964-969, XP025571980, ISSN: 0740-0020, DOI: 10.1016/J.FM.2008.05.008 [retrieved on 2008-05-28]**

**Description**

**FIELD OF THE INVENTION**

The invention relates to the use of synergistic combinations of antimicrobials and methods of their use for the control of undesirable microorganisms in aqueous biorefining or industrial fermentation systems.

**BACKGROUND OF THE INVENTION**

It is known that the presence of microorganisms in industrial water systems may be a significant problem in industrial processes, causing issues with decreased product yields, product quality, and process efficiency. The physical presence of microbes may causes problems, such as their growth in biofilms on heat exchanging surfaces where they cause reductions in heat transfer efficiency. The ability of microbes to consume a wide variety of materials may cause reductions in yields, for example, when microbe consuming cellulose cause yield loss in the paper-making industry. In addition, the production of metabolic products by contaminating microbes may cause issues, such as their production of acidic products which may cause product quality issues or contribute to corrosion issues.

However, in some industries microorganisms are used to produce a number of fermentation products, such as industrial grade ethanol, distilled spirits, beer, wine, pharmaceuticals and nutraceuticals (foodstuff that provides health benefits, such as fortified foods and dietary supplements), baking industry and industrial chemicals. In these instances it is desirable to suppress the growth of unwanted microbes and promote the growth of the wanted ones. In this context the unwanted microbes are those which compete for substrate with or produce metaolic products that interfere with the growth of the wanted microbes which are producing the desired end product.

Yeast are commonly used microbes in fermentation processes. One common type of yeast is *Saccharomyces cerevisiae,* the species predominantly used in baking and fermentation. Non-*Saccharomyces* yeasts, also known as non-conventional yeasts, are also used to make a number of commercial products.

Other microorganisms can also be useful in making fermentation products. For example, cellulosic ethanol production, production of ethanol from cellulosic biomass, utilizes fungi and bacteria. Examples of these cellulolytic fungi include *Trichoderma reesei and Trichoderma viride.* One example of a bacteria used in cellulosic ethanol production is *Clostridium ljungdahlii.*

Most of the yeast used in distilleries and fuel ethanol plants are purchased from manufacturers of specialty yeasts. The yeast is manufactured through a propagation process. Propagation involves growing a large quantity of yeast from a small lab culture of yeast. During propagation, the yeast are provided with the oxygen, nitrogen, sugars, proteins, lipids and ions that are necessary or desirable for optimal growth through aerobic respiration.

Once at the distillery, the yeast can undergo conditioning. Conditioning is unlike propagation in that it does not involve growing a large quantity from a small lab culture. During conditioning, conditions are provided to re-hydrate the yeast, bring them out of hibernation and allow for maximum anaerobic growth and reproduction. The objective of both propagation and conditioning is to deliver a large volume of yeast to the fermentation tank with high viability, high budding and a low level of infection by other microorganisms.

Following propagation and/or conditioning, the yeast enters the fermentation process. The yeast is combined in an aqueous solution with fermentable carbohydrates, such as sugars. The yeast consumes the sugars, converting them into aliphatic alcohols, such as ethanol.

The fermentation process begins with the preparation of a fermentable carbohydrate. In ethanol production, corn is one possible source of fermentable carbohydrate. Other carbohydrate sources including cereal grains and cellulose-starch bearing materials, such as wheat or milo, can also be used. Cellulosic biomass such as straw and cornstalks can also be used. Cellulosic ethanol production has recently received attention because it uses readily available nonfood biomass to form a valuable fuel.

The propagation, conditioning and fermentation processes can be carried out using batch or continuous methods. The batch process is used for small-scale production. Each batch is completed before a new one begins. The continuous fermentation method is used for large-scale production because it produces a continuous supply without restarting every time.

During the propagation, conditioning or fermentation process the mash or the fermentation mixture can become contaminated with other microorganisms, such as spoilage bacteria. These microorganisms compete with the desired species of yeast for fermentable sugars and retard the desired bio-chemical reaction resulting in a lower product yield. They can also produce unwanted chemical by-products, which can cause spoilage of entire fermentation batches.

Producers of ethanol attempt to increase the amount of ethanol produced from one bushel of cereal grains (approximately 56 pounds (25.4 kilograms)). Contamination by bacteria lowers the efficiency of yeast making it difficult to attain or exceed the desired levels of 2.8-2.9 gallons of ethanol per bushel (.42-.44 liters per kilogram). Reducing the concentration of bacteria will encourage yeast propagation and/or conditioning and increase yeast efficiency making it possible to attain and exceed these desired levels.

During any of these three processes the yeast can become contaminated with undesirable yeast, bacteria or other undesirable microorganisms. This can occur in one of the many vessels used in propagation, conditioning or fermentation. This includes, but is not limited to, propagation tanks, conditioning tanks, starter tanks, fermentations tanks and piping and heat exchangers between these units.

Bacterial contamination reduces the fermentation product yield in three main ways. First, the sugars that could be available for yeast to produce alcohol are consumed by the bacteria and diverted from alcohol production, reducing yield. Second, the end products of bacterial metabolism, such as lactic acid and acetic acid, inhibit yeast growth and yeast fermentation/respiration, which results in less efficient yeast production. Finally, the bacteria compete with the yeast for nutrients other than sugar.

After the fermentation system or vessel has become contaminated with bacteria those bacteria can grow much more rapidly than the desired yeast. The bacteria compete with the yeast for fermentable sugars and retard the desired bio-chemical reaction resulting in a lower product yield. Bacteria also produce unwanted chemical by-products, which can cause spoilage of entire fermentation batches. Removing these bacteria allows the desired yeast to thrive, which results in higher efficiency of production.

As little as a one percent decrease in ethanol yield is highly significant to the fuel ethanol industry. In larger facilities, such a decrease in efficiency will reduce income from 1 million to 3 million dollars per year.

Some methods of reducing bacteria during propagation, conditioning and fermentation take advantage of the higher temperature and pH tolerance of yeast over other microorganisms. This is done by applying heat to or lowering the pH of the yeast solution. However, these processes are not entirely effective in retarding bacterial growth. Furthermore, the desirable yeast, while surviving, are stressed and not as vigorous or healthy and do not perform as well.

The predominant trend in the ethanol industry is to reduce the pH of the mash (feed stock) to less than 4.5 at the start of fermentation. Lowering the pH of the mash reduces the population of some species of bacteria. However it is much less effective in reducing problematic bacteria, such as lactic-acid producing bacteria or acetic acid producing bacteria. It also significantly reduces ethanol yield by stressing the yeast used for ethanol production.

Another approach involves washing the yeast with phosphoric acid. This method does not effectively kill bacteria. It can also stress the yeast used for ethanol production, thereby lowering their efficiency.

Yet another method is to use heat or harsh chemicals to sterilize process equipment between batches. It is ineffective at killing bacteria within the yeast mixture during production.

In yet another method, antibiotics are added to yeast propagation, conditioning or fermentation batch to neutralize bacteria. Currently, almost all U.S. biorefining plants utilize an antimicrobial agent and many of them use antibiotics such as virginiamycin. An important product of corn biorefining is dried distillers grains for use as animal feed, and the market for antibiotic-free feed grains is growing. It is expected that the FDA will soon form regulations reducing or eliminating antibiotic use in animal feed. Canada has similar concerns regarding antibiotics in distillers grains and most of their production is exported. Europe has already banned the use of antibiotics in ethanol plants where distillers grains are produced for animal feed. In Brazil, operating antibiotic-free is mandatory in plants producing yeast extract for export. Distiller grains sales account for up to 20% of an ethanol plant earnings. Antibiotic concentration in the byproduct can range from 1-3% by weight, thus negating this important source of income.

In addition, there are other issues to consider when using antibiotics. Mixtures of antibiotics should be frequently balanced and changed in order to avoid single uses that will lead to antibiotic-resistant strains. Sometimes the effective amount of antibiotic cannot be added to the fermentation mixture. For example, utilizing over 2 mg/L of Virginiamycin will suppress fermentation but over 25 mg/L is required to inhibit grown of *Weisella confusa,* an emerging problematic bacteria strain. Overdosing or overuse of antibiotic can stress yeast and impact efficiency or cause regulatory non-compliance.

Industries that employ fermentation for beverages have historically applied hops acid to propagation and fermentation to control unwanted microbes that compete with the yeast for nutrients. With the recent expansion of fuel ethanol, hops acids have been utilized to a minor deg*ree to address u*nwanted, gram positive microbes. Competition between yeasts and unwanted microbes results yield loss of fuel ethanol as unwanted microbes, primarily *Lactobacillus* and *Acetobacter,* reduce the efficiency of fermentation. In beverage, competing microbes not only reduce efficiency but can alter the aesthetics and taste of the final product.

Another alternative to the use of antibiotics to control unwanted bacteria in fermentation processes is the application of chlorine dioxide. Chlorine dioxide is an oxidizing antimicrobial, often generated in situ, that can be applied to several dosing sites in the fermentation process. The large volumes of the systems to be treated and the limited capacities of current chlorine dioxide generating systems often limits the fermentation systems that can be treated with this approach or requires the deployment of multiple generators.

Since small decreases in ethanol yield are highly significant to the fuel ethanol industry, ethanol producers are constantly looking for ways to increase efficiency. Antimicrobials are used to eliminate, reduce or otherwise control the number of microbes in the aqueous systems. However, the use of antimicrobials will always add cost to operations and products and thus more effective ways to achieve microbial control are sought. In addition, some antimicrobials may have deficiencies in either their spectrum of antimicrobial action or operational limitations in their manner of application, such as lack of temperature stability or susceptibility to inactivation by environmental or chemical factors. Furthermore, in the instance of facilities using chlorine dioxide or other *in situ* generated antimicrobials, limitations on the volume of antimicrobial able to be produced may be significant.

Therefore, combinations of antimicrobials may be used, and in particular, synergistic combinations of antimicrobials are preferred. Synergistic combinations of antimicrobials can deliver an antimicrobial effect greater than the sum of the individual antimicrobials and thus can provide an improved cost performance over those combinations which are merely additive in terms of antimicrobial efficacy. In addition, synergistic combinations of antimicrobials in which one is an in situ generated antimicrobial may reduce the required volume of antimicrobial and thus increase the maximum size of the system which can be treated.

One potential alternative to the use of antibiotics is the application of antimicrobial organic acids, which are used as food preservatives, thus negating concerns of their presence in distillers grains. Organic acids have many applications, including being used as acidifiers, buffers, antioxidants, chelators, synergists, dietary supplements, flavoring agents, preservatives and antimicrobials. Organic acids have been used as preservatives because of their effect on bacteria. A potential drawback to this approach is the relatively high levels and volumes required when they are used by themselves.

Synergistic combinations of antimicrobials can deliver an antimicrobial effect greater than the sum of the individual antimicrobials and thus can provide an improved cost performance over those combinations which are merely additive in terms of antimicrobial efficacy.

H. Kim et al., Food Microbiology 25 (2008) 964-969 describe the production and stability of chlorine dioxide in organic acid solutions as affected by pH, type of acid, and concentration of sodium chlorite, and its effectiveness in in activating Bacillus cereus spores.

WO 2007/149450 A2 relates to a fermentation process for the production of ethanol from natural sources, comprising introducing a fermentable sugar, an inoculant, and a stabilized chlorine dioxide into a fermentation system.

US 2002/0053657 A1 describes a solution for generating chlorine dioxide, said solution comprising a chlorite, a chlorite donor, an alkali and water.

US 6,071,483 describes a reactor vessel and an associated process for preparing a controlled-dosage chlorine dioxide solution.

US 2004/0231977 A1 describes compositions and methods for increasing the stability and/or efficacy of chlorine dioxide, particularly chlorine dioxide generated via electrolysis of chlorite.

US 5,165,910 describes a compact manufacturing method of an aqueous stabilized chlorine dioxide which is useful as disinfectant or deodorant. The method comprises adding to an aqueous alkali metal chloride solution an aqueous alkali metal hypochlorite solution, while before and after the addition of the hypochlorite solution an organic acid such as citric acid or an inorganic acid such as hydrochloric acid is used to adjust the pH to 7-9 or 2-5.6, respectively.

BRIEF DESCRIPTION OF THE FIGURES

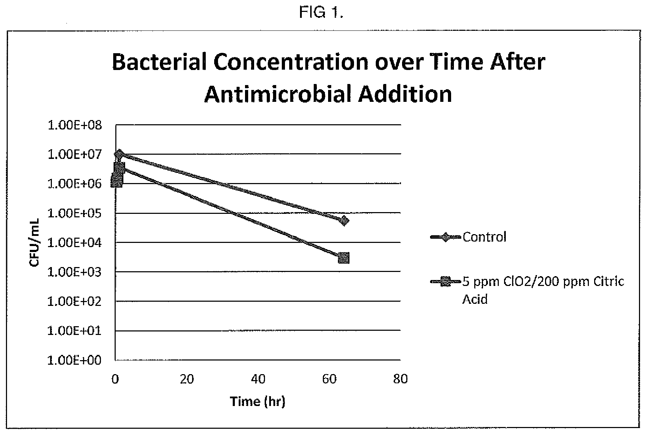

Figure **1** depicts the bacterial count over time after antimicrobial addition

**DESCRIPTION OF THE INVENTION**

For the purposes of this specification, the meaning of "microorganisms" and "microbes" includes, but is not limited to, bacteria, fungi, algae, protozoans, and viruses. Preferred microbes against which these compositions are effective are bacteria. Examples of undesirable bacteria include, but are not limited to, lactic acid bacteria, acetic acid bacteria, and bacteria which contaminate ethanol fermentation processes. It is also understood that the microbes within aqueous systems can be located or suspended within the fluid (eg, planktonic) or localized on a surface in contact with the aqueous system (eg, biofilms). The words and phrases "control", "microbial control", "controlling", and "antimicrobial efficacy" should be construed to include within their meaning, without being limited to, inhibiting the growth of microbes, killing microbes, disinfection, preservation, sanitization, or preventing the re-growth of microbes.

As used herein ppm is measured as mass per volume or 1 ppm equals 1 mg (active) per liter.

As used herein the term "organic acid" is also referring to its salt.

The present invention provides the use of a synergistic combination of: (a) chlorine dioxide and (b) at least one organic acid which is citric acid or its salt for controlling undesirable microorganism concentration in an aqueous system which is a biorefining system or industrial fermentation system, wherein the ratio of chlorine dioxide to organic acid is from 1:1 to 1:15'000; and wherein the chlorine dioxide is at a concentration of from 1 to 15 ppm in the aqueous system. The present invention provides for a significant reduction of the number of contaminating bacteria in said aqueous systems where the presence of the bacteria is considered undesirable.

The antimicrobial combinations are used especially for controlling microorganisms in aqueous systems in the biorefining industry producing ethanol or other chemicals. The combinations include citric acid or its salt.

It has been discovered that using the combinations of chlorine dioxide and at least one organic acid which is citric acid provides synergistic microbial control in aqueous systems which are biorefining system or industrial fermentation system. Thus, the combination of components result in improved antimicrobial efficacy beyond that which would be expected based on the sum of their individual antimicrobial efficacies. This unexpectedly observed synergy permits reduced amounts of the antimicrobials to be used to achieve acceptable microbial control in industrial processes such as biorefining.

The chlorine dioxide used may be generated *in situ* via a chemical transformation of chlorite or chlorate or other substrate, via electrochemical generation, or may be provided by stabilized formulations of chlorine dioxide. The organic acids used in the combination include citric acid. The salts of citric acid are also useful.

In instances in which the antimicrobial is *produced in situ* such as chlorine dioxide, the reduction in the amount of antimicrobial required allows the combinations to be used in systems whose volume requirements would otherwise be too large to be treated by chlorine dioxide alone.

The composition components may be formulated as a single mixture and added to the system to be treated. They may also be blended after the *in situ* generation of the chlorine dioxide and added to the system, or they may be added sequentially or at different locations in the process. A person of ordinary skill in the art can readily determine the appropriate method of addition for each system to be treated.

One non-limiting embodiment of the current method for reducing undesirable microorganism concentration in an aqueous system which is a biorefining system or industrial fermentation system comprises:

(a) introducing chlorine dioxide into the system to be treated

(b) introducing an organic acid, wherein the organic acid is citric acid or its salt into the system to be treated,

wherein the chlorine dioxide is at a concentration of 1 ppm to 15 ppm in the aqueous system to being treated and the ratio of chlorine dioxide to organic acid is from 1:1 to 1:15'000.

Suitable examples of additional organic acids useful in the present invention include but are not limited to benzoic acid, propionic acid, tartaric acid, acetic acid, benzenesulfonic acid, oxalic acid, malic acid, salicylic acid, lactic acid gluconic acid, hydroxyacetic acid and their salts. For purposes of this invention the organic acid is not a hops acid.

Aqueous systems in which the compositions are used are biorefining processes and industrial fermentations, biorefining waters, and systems that use them.

The pH of the aqueous system to be treated is generally is from 3 to 11, or from 3 to 7, or from 4 to 9, or from 4 to 8, or from 4 to 6.5, or from 4.5 to 6. In general, the organic acids work best in systems where the pH of the system is less than or equal to at least one of the pKa values of the acid or its salt.

The components of the composition can be added to the aqueous system to be treated sequentially or combined and then added to the system to be treated. The organic acids can be added to the aqueous side systems with other additives such as, but not necessarily restricted to, surfactants, scale and corrosion control compounds, ionic or non-ionic polymers, pH control agents, and other additives used for altering or modifying the chemistry of the aqueous system.

The chlorine dioxide ($ClO_2$) is added to the systems to be treated in the ratios of chlorine dioxide to the organic acid of from 1:1 to 1:15'000, in particular from 1:1 up to 1:10'000 or from 1:1 to 1:2000 or from 1:1 to 1:1000 or from 1:4 to 1:15'000 or from 1:4 up to 1:10'000 or from 1:4 to 1:2000 or from 1:4 to 1:1000 or from 1:20 to 1:100.

A person of ordinary skill in the art can readily determine the concentration of the composition required to achieve acceptable microbial control, and that the concentration is dependent on the matrix. The chlorine dioxide is used in amounts of from 1 ppm to 15 ppm in the aqueous system to be treated, in particular from 3 ppm to 15 ppm or from 3 to 9 ppm. Generally at least 3 ppm or at least 5 ppm or at least 7 ppm of the chlorine dioxide is used in the system being treated. The ratio of the chlorine dioxide to the at least one organic acid is from 1:1 up 1:15'000 in particular from 1:1 to 1:10'000 or from 1:1 to 1:2000 or from 1:1 to 1:1200 or from 1:4 to 1:15,000 or from 1:4 to 1:10'000 or from 1:4 to 1:2000 or from 1:4 to 1:1000 or from 1:20 to 1:100.

In one embodiment the ratio of chlorine dioxide to the organic acid can be from 1:4 up to 1:100 or from 1:4 to 1:50 or from 1:4 to 1:15. The amount of chlorine dioxide used in the aqueous system to be treated is from 1 ppm to 15 ppm, in particular from 1 ppm to 10 ppm or from 3 ppm to 9 ppm.

In the present invention the organic acid is citric acid or its salt and the ratio of chlorine dioxide is from 1:1 up to 1:15'000 or from 1:1 to 1: 10'000 or from 1:1 to 1:5000 or 1:1 to 1:2000 or from 1:1 to 1:1000 or from 1:4 to 1:15'000 or from 1:4 to 1:2000 or from 1:4 to 1:1000 or from 1:20 to 1:100. Citric acid could be used in an amount of 6250 down to 100 ppm or from 4000 down to 100 ppm or from 4000 down to 200 ppm in the aqueous system to be treated. Generally at least 100 ppm or at least 200 ppm or at least 300 ppm of citric acid is used in the aqueous system to be treated.

The invention provides methods of using synergistic antimicrobial combinations in the control of microorganisms, for example in industrial fermentations producing ethanol or other chemicals.

When used in a fermentation system the combination of chlorine dioxide and citric acid or its salt can be added in various locations in the fermentation system such as can be added in single or multiple locations in the fermentation process, including the slurry tank(s), cookers, mash coolers, propagators and fermentation tanks. One skilled in the art may also determine other addition points.

In fermentation systems using the present method, the concentrations of bacteria and other undesirable microorganisms can be reduced while propagation and/or conditioning of desirable microorganisms are encouraged. It has been discovered that chlorine dioxide in combination with at least citric acid or its salt is effective at reducing the concentration of undesirable bacteria and other undesirable microorganisms while simultaneously encouraging propagation and/or conditioning of desirable microorganisms. The combination of these products provides a synergistic, antimicrobial treatment without the use of antibiotics.

One non-limiting embodiment of the current method for reducing undesirable microorganism concentration, promoting desirable microorganism propagation, and increasing desirable microorganism efficiency in an aqueous system comprises:

(a) introducing a fermentable carbohydrate to an aqueous system,
(b) introducing at least one yeast or desirable microorganism to the aqueous system, and
(c) introducing chlorine dioxide and at least one organic acid to the aqueous system, wherein organic acids include at least citric acid or its salts.

Another non-limiting embodiment of the current method for reducing undesirable microorganism concentration, promoting yeast propagation, and increasing yeast efficiency in an aqueous system comprises

(a) introducing a quantity of fermentable carbohydrate to an aqueous system,
(b) introducing a quantity of yeast to the aqueous system, and
(c) introducing chlorine dioxide and at least one organic acid the aqueous system, wherein organic acids include at least citric acid or its salts.

The steps of the method can be performed sequentially or in a different order. The chlorine dioxide and the organic acid can be brought into contact with the yeast or with the fermentation carbohydrate or the yeast and the fermentable carbohydrate can be combined and then the chlorine dioxide and the organic acid be introduced into the combination of yeast and carbohydrate. The chlorine dioxide and the organic acid can be combined together and then added to the aqueous system or they can be added separately to the aqueous system. The aqueous system can be in a continuous process or may be a tank in the case of a batch process.

In the method, the "undesirable" microorganisms intended to be reduced are those that compete for nutrients with the desirable microorganisms that promote the desired fermentation processes. In this regard, chlorine dioxide and the organic acid employed in the present method preferably do not detrimentally affect the growth and viability of desirable, fermentation-promoting microorganisms, but does eliminate or suppress the growth of undesirable microorganisms that interfere with the fermentation process. Moreover, the elimination or suppression of undesirable microorganisms has a favorable effect on the growth and viability of desirable microorganisms.

The production of fuel ethanol by yeast fermentation is used as an example of where the present invention can be used. Other fermentation products which could employ the combination of the chlorine dioxide in conjunction with at least one organic acid, including citric acid or its salt could include distilled spirits, beer, wine, pharmaceuticals, pharmaceutical intermediates, baking products, nutraceuticals (foodstuff that provides health benefits, such as fortified foods and dietary supplements), nutraceutical intermediates, industrial chemical feedstocks, and enzymes. The current method could also be utilized to treat yeast used in the baking industry.

Yeast is not the only beneficial microorganism used in fermentation. Additional desirable fermenting microorganisms could also be used and benefited by the invention such as the fungi and bacteria typically used in cellulosic ethanol production. Some non-limiting examples of desirable fermenting microorganisms include, but are not limited to, *Trichoderma reesei, Trichoderma viride,* and *Clostridium ljungdahlii.*

The chlorine dioxide in conjunction with the organic acid can be added at various points in the propagation, conditioning and/or fermentation processes. The chlorine dioxide in conjunction with the organic acid can be added to cook vessels, fermentation tanks, propagation tanks, conditioning tanks, starter tanks or during liquefaction. The chlorine dioxide in conjunction with the organic acid can also be added directly to the corn mash. The chlorine dioxide in conjunction with the organic acid can also be added to the interstage heat exchange system or heat exchangers. The chlorine dioxide in conjunction with at least one organic acid can also be added to the piping between these units or heat exchangers. At least one organic acid is citric acid.

The chlorine dioxide in conjunction with the organic acid can be added directly into the fermentation mixture.

This can be done by adding the chlorine dioxide and at least citric acid or its salt in conjunction with the yeast or other desirable microorganism and fermentable carbohydrate, for example during the SSF (Simultaneous saccharification and fermentation) stage. The chlorine dioxide dosages of between 1 and 15 ppm and the organic acid dosages of between 1 and 15'000 or between 1 to 2000 ppm can be added directly into the fermentation mixture.

The chlorine dioxide in conjunction with the organic acid can also be added to the mash prior to the fermentation process. The chlorine dioxide dosages of between 1 and 15 ppm and the organic acid dosages of between 1 and 15'000 or between 1 to 2000 ppm can be added to the mash prior to fermentation.

The chlorine dioxide in conjunction with the organic acid can also be added during propagation and/or conditioning.

The chlorine dioxide in conjunction with the organic acid can be used to achieve improved results in the production of cellulosic ethanol. Cellulosic ethanol is a type of ethanol that is produced from cellulose, as opposed to the sugars and starches used in producing carbohydrate based ethanol. Cellulose is present in non-traditional biomass sources such as switch grass, corn stover and forestry. This type of ethanol production is particularly attractive because of the large availability of cellulose sources. Cellulosic ethanol, by the very nature of the raw material, introduces higher levels of contaminants and competing microorganism into the fermentation process. The chlorine dioxide in conjunction with at least one organic acid can be used in cellulosic ethanol production to control undesirable microorganisms. The chlorine dioxide dosages of between 1 and 15 ppm and the organic acid dosages of between 1 and 15,000 or between 1 to 2000 ppm can be added directly into the fermentation mixture. At least one organic acid is citric acid.

There are two primary processes of producing alcohol from cellulose. One process is a hydrolysis process that utilizes fungi, as for example *Trichoderma reesei* and/or *Trichoderma viride.* The other is a gasification process using a bacteria such as *Clostridium ljungdahlii.* The chlorine dioxide in conjunction with at least one organic acid can be utilized in either process. At least one organic acid is citric acid.

In the hydrolysis process the cellulose chains are broken down into five carbon and six carbon sugars before the fermentation process. This is either done chemically or enzymatically.

In the chemical hydrolysis method the cellulose can be treated with dilute acid at high temperature and pressure or concentrated acid at lower temperature and atmospheric pressure. In the chemical hydrolysis process the cellulose reacts with the acid and water to form individual sugar molecules. These sugar molecules are then neutralized and yeast fermentation is used to produce ethanol. The chlorine dioxide in conjunction with at least citric acid or its salt can be used during the yeast fermentation portion of this method.

Enzymatic hydrolysis can be carried out using two methods. The first is known as direct microbial conversion (DMC). The DMC method uses a single microorganism to convert the cellulosic biomass to ethanol. The ethanol and required enzymes are produced by the same microorganism. The chlorine dioxide in conjunction with the organic acid can be used during the propagation/conditioning or fermentation steps with this specialized organism.

The second method is known as the enzymatic hydrolysis method. In this method cellulose chains are broken down using cellulase enzymes. These enzymes are typically present in the stomachs of ruminants, such as cows and sheep, to break down the cellulose that they eat. The enzymatic method is typically carried out in four or five stages. The cellulose is pretreated to make the raw material, such as wood or straw, more amenable to hydrolysis. Next the cellulase enzymes are used to break the cellulose molecules into fermentable sugars. Following hydrolysis, the sugars are separated from residual materials and added to the yeast. The hydrolyzate sugars are fermented to ethanol using yeast. Finally, the ethanol is recovered by distillation. Alternatively, the hydrolysis and fermentation can be carried out together by using special bacteria or fungi that accomplish both processes. When both steps are carried out together the process is called sequential hydrolysis and fermentation (SHF).

The chlorine dioxide in conjunction with the organic acid can be introduced for microbiological efficacy at various points in the enzymatic method of hydrolysis. The chlorine dioxide in conjunction with the organic acid can be used in the production, manufacture and fermentation of cellulase enzymes made by *Trichoderma* and other fungi strains. The chlorine dioxide in conjunction with the organic acid can be added in the cellulosic simultaneous saccharification and fermentation phase (SSF). The chlorine dioxide in conjunction with the organic acid can be introduced in the sequential hydrolysis and fermentation (SHF) phase. They could also be introduced at a point before, during or after the fermentation by cellulolytic fungi that create the cellulase enzymes. Alternatively the chlorine dioxide in conjunction with the organic acid can be added during the yeast fermentation phase, as discussed above.

The gasification process does not break the cellulose chain into sugar molecules. First, the carbon in the cellulose is converted to carbon monoxide, carbon dioxide and hydrogen in a partial combustion reaction. Then, the carbon monoxide, carbon dioxide and hydrogen are fed into a special fermenter that uses a microorganism such as *Clostridium Ijungdahlii* that is capable of consuming the carbon monoxide, carbon dioxide and hydrogen to produce ethanol and water. Finally, the ethanol is separated from the water in a distillation step. The chlorine dioxide in conjunction with the organic acid can be used as an antimicrobial agent in the fermentation step involving microorganisms such as *Clostridium Ijungdahlii* that are capable of consuming carbon monoxide, carbon dioxide and hydrogen to produce ethanol and water.

In one non-limiting embodiment, chlorine dioxide in conjunction with at least one organic acid is added to a tank and diluted to a predetermined concentration at a predetermined ratio. In the tank, the chlorine dioxide in conjunction with the organic acid are dissolved in water to form chlorine dioxide in conjunction with the organic acid blend. The concentration of the chlorine dioxide in conjunction with the organic acid in the batch tank can vary across a wide range. The chlorine dioxide in conjunction with at least one organic acid is then exhausted from the batch tank through an outlet at a specified dosage rate to create a solution of the desired concentration. At least one organic acid is citric acid.

EXAMPLES

The synergy indices reported in the following examples use the following formula, which was first reported in F.C. Kull, P.C. Eisman, H.D. Sylwestrowka, and R.L. Mayer, Applied Microbiology 9:538-541, 1961:

$$\text{Synergy Index} = Qa/QA + Qb/QB$$

where Qa is the concentration of Antimicrobial A required to achieve complete inhibition of growth of the test microbe when used in combination with Antimicrobial B;
QA is the concentration of Antimicrobial A required to achieve complete inhibition of growth of the test microbe when used alone;
Qb is the concentration of Antimicrobial B required to achieve complete inhibition of growth of the test microbe when used in combination with Antimicrobial A;
QB is the concentration of Antimicrobial B required to achieve complete inhibition of growth of the test microbe when used alone.

A synergy index (SI) of 1 indicates the interactions between the two antimicrobials is merely additive, a SI of greater than one indicates the two antimicrobials are antagonistic with each other, and a SI of less than 1 indicates the two antimicrobials interact in a synergistic manner.
While there are various methods known to individuals skilled in the art for measuring levels of antimicrobial activity, in the following examples the endpoint used is known as the Minimal Inhibitory Concentration, or MIC. This is the lowest concentration of a substance or substances which can achieve complete inhibition of growth.
In order to determine the Minimal Inhibitory Concentration, a two-fold dilution series of the antimicrobial is constructed with the dilutions being made in growth media. The dilutions are made in a 96 well microplate such that each well has a final volume of 280 $\mu$l of media and antimicrobial. The first well has, for example, a concentration of 1000 ppm antimicrobial, the second 500 ppm, the third 250 ppm, and so forth, with the 12th and final well in the row having no antimicrobial at all and serving as a positive growth control. After the dilution series is constructed the wells receive an inoculum of microbe suspended in growth media such that the final concentration of microbes in the well is ~5 x $10^5$ cfu/ml. In these examples the test microbe used is *Lactobacillus plantarum.* The cultures are incubated at an appropriate temperature for 18-24 hours, and the wells scored as positive or negative for growth based on a visual examination for turbid wells. A turbid well indicates growth has occurred. The lowest concentration of antimicrobial which completely inhibits growth (e.g., a clear well) is designated the Minimal Inhibitory Concentration.
In order to determine whether the interaction between two antimicrobials is additive, antagonistic, or synergistic against a target microbe a modification of the MIC method known as the "checkerboard" method is employed using 96 well microplates. To construct a checkerboard plate the first antimicrobial is deployed using the two-fold serial dilution method used to construct an MIC plate, except that each of the eight rows is an identical dilution series which terminates after the eighth column. The second antimicrobial is deployed by adding identical volumes of a twofold dilution series at right angles to the first series. The result is each well of the 8 x 8 well square has a different combination of antimicrobial concentrations, yielding 64 different combinations in total. The 9th and 10th columns receive no antimicrobial at all and serve as positive and negative growth controls, respectively. After the checkerboard microplate is constructed, it is inoculated with *Lactobacillus plantarum,* incubated at 37°C, and scored as described for the MIC method.

Example 1: Synergy of Chlorine Dioxide with Citric Acid (Reference Example)

Minimal inhibitory concentrations were determined for both chlorine dioxide and citric acid at pH 6 using the protocol described above with *Lactobacillus plantarum* as the test microbe. Checkerboard synergy plates were constructed as described, the wells inoculated to a final concentration of ~5 x $10^5$ cfu/ml, incubated for 18-24 hours, and then scored visually for growth/no growth. Synergy indices were calculated according to the formula described by Kull et al. This example demonstrates that the effect of combining chlorine dioxide and citric acid is greater than the effect of either antimicrobial alone. The amount of chlorine dioxide needed to inhibit bacterial growth is reduced from 100 ppm to 15-60 ppm. The concentration of citric acid drops from 100,000 ppm to a range of 390-12,500 ppm.

| Table 1 | | | | | |
|---|---|---|---|---|---|
| Used alone | | Used in Combination | | | |
| ClO$_2$ MIC (QA) ppm | Citric Acid MIC (QB) ppm | ClO$_2$ MIC (Qa) ppm | Citric Acid MIC (Qb) ppm | ClO$_2$:Citric Acid Ratio | Synergy Index |
| 100 | 100000 | 15 | 12500 | 1:833 | 0.28 |
| 100 | 100000 | 30 | 6250 | 1:208 | 0.36 |
| 100 | 100000 | 30 | 3125 | 1:104 | 0.33 |
| 100 | 100000 | 60 | 1563 | 1:26 | 0.62 |
| 100 | 100000 | 60 | 782 | 1:13 | 0.61 |
| 100 | 100000 | 60 | 390 | 1:6.5 | 0.60 |

Example 2: Synergy of Chlorine Dioxide with Sodium Propionate (Comparative Example)

Minimal inhibitory concentrations were determined for both chlorine dioxide and sodium propionate at pH 6 using the protocol described above with *Lactobacillus plantarum* as the test microbe. Checkerboard synergy plates were constructed as described, the wells inoculated to a final concentration of ~5 x 10$^5$ cfu/ml, incubated for 18-24 hours, and then scored visually for growth/no growth. Synergy indices were calculated according to the formula described by Kull et al. This example demonstrates that the effect of combining chlorine dioxide and sodium propionate is greater than the effect of either antimicrobial alone. The amount of chlorine dioxide needed to inhibit bacterial growth is reduced from 115 ppm to 25 ppm and 100 ppm. The concentration of sodium propionate drops from 100,000 ppm to a range of 390 ppm - 25,000 ppm.

| Table 2 | | | | | |
|---|---|---|---|---|---|
| Used alone | | Used in Combination | | | |
| ClO$_2$ MIC (QA) ppm | Sodium Propionate MIC (QB) ppm | ClO$_2$ MIC (Qa) ppm | Sodium Propionate MIC (Qb) ppm | ClO$_2$: Sodium Propionate Ratio | Synergy Index |
| 115 | 100000 | 25 | 25000 | 1:1000 | 0.47 |
| 115 | 100000 | 100 | 3125 | 1:31.25 | 0.90 |
| 115 | 100000 | 100 | 1563 | 1:15.63 | 0.89 |
| 115 | 100000 | 100 | 782 | 1:7.82 | 0.88 |
| 115 | 100000 | 100 | 390 | 1:4 | 0.87 |

Example 3: Synergy of Chlorine Dioxide with Potassium Benzoate (Benzoic Acid) (Comparative Example)

Minimal inhibitory concentrations were determined for both chlorine dioxide and potassium benzoate at pH 6 using the protocol described above with *Lactobacillus plantarum* as the test microbe. Checkerboard synergy plates were constructed as described, the wells inoculated to a final concentration of ~5 x 10$^5$ cfu/ml, incubated for 18-24 hours, and then scored visually for growth/no growth. Synergy indices were calculated according to the formula described by Kull et al. This example demonstrates that the effect of combining chlorine dioxide and potassium benzoate is greater than the effect of either antimicrobial alone. The amount of chlorine dioxide needed to inhibit bacterial growth is reduced from 115 or 130 ppm to 0.78 ppm-100 ppm. The concentration of potassium benzoate drops from 100,000 ppm to a range of 390 ppm - 50,000 ppm.

| Table 3 | | | | | |
|---|---|---|---|---|---|
| Used alone | | Used in Combination | | | |
| $ClO_2$ MIC (QA) ppm | Potassium Benzoate MIC (QB) ppm | $ClO_2$ MIC (Qa) ppm | Potassium Benzoate MIC (Qb) ppm | $ClO_2$:Potassium Benzoate Ratio | Synergy Index |
| 115 | 100000 | 12.5 | 6250 | 1:500 | 0.17 |
| 115 | 100000 | 25 | 3125 | 1:125 | 0.25 |
| 115 | 100000 | 25 | 1563 | 1:63 | 0.23 |
| 115 | 100000 | 25 | 782 | 1:31 | 0.23 |
| 115 | 100000 | 3.125 | 25000 | 1:8000 | 0.28 |
| 115 | 100000 | 12.5 | 12500 | 1:1000 | 0.23 |
| 115 | 100000 | 50 | 6250 | 1:125 | 0.50 |
| 115 | 100000 | 100 | 3125 | 1:31.25 | 0.90 |
| 115 | 100000 | 100 | 1563 | 1:15.63 | 0.89 |
| 115 | 100000 | 100 | 782 | 1:7.82 | 0.88 |
| 115 | 100000 | 100 | 390 | 1:3.9 | 0.87 |
| 130 | 100000 | 8 | 50000 | 1:6250 | 0.56 |
| 130 | 100000 | 16 | 25000 | 1:1563 | 0.37 |
| 130 | 100000 | 16 | 12500 | 1:781 | 0.25 |
| 130 | 100000 | 63.5 | 6250 | 1:98 | 0.55 |
| 130 | 100000 | 63.5 | 3125 | 1:49 | 0.52 |
| 130 | 100000 | 127 | 1563 | 1:12.3 | 0.99 |
| 130 | 100000 | 127 | 782 | 1:6.2 | 0.99 |

Example 4: Chlorine Dioxide with Ascorbic Acid (Comparative Example)

Minimal inhibitory concentrations were determined for both chlorine dioxide and ascorbic acid at pH 6 using the protocol described above with *Lactobacillus plantarum* as the test microbe. Checkerboard synergy plates were constructed as described, the wells inoculated to a final concentration of ~5 x $10^5$ cfu/ml, incubated for 18-24 hours, and then scored visually for growth/no growth. Synergy indices were calculated according to the formula described by Kull et al. This example demonstrates that the effect of combining chlorine dioxide and ascorbic acid is antagonistic. Therefore, substituting "any" organic acid in conjunction with chlorine dioxide is not feasible or obvious to one relatively skilled in the art.

| Table 4 | | | | | |
|---|---|---|---|---|---|
| Used alone | | Used in Combination | | | |
| $ClO_2$ MIC (QA) ppm | Ascorbic Acid MIC (QB) ppm | $ClO_2$ MIC (Qa) ppm | Ascorbic Acid MIC (Qb) ppm | $ClO_2$: Ascorbic Acid Ratio | Synergy Index |
| 67.5 | 10000 | 67.5 | 5000 | 1:74 | 1.50 |
| 67.5 | 10000 | 67.5 | 2500 | 1:37 | 1.25 |
| 67.5 | 10000 | 67.5 | 1250 | 1:18.5 | 1.13 |
| 67.5 | 10000 | 67.5 | 625 | 1:9.26 | 1.06 |
| 67.5 | 10000 | 135 | 313 | 1:2.32 | 2.03 |
| 67.5 | 10000 | 67.5 | 156.3 | 1:2.32 | 1.02 |

(continued)

| Table 4 | | | | | |
| Used alone | | Used in Combination | | | |
| CIO$_2$ MIC (QA) ppm | Ascorbic Acid MIC (QB) ppm | CIO$_2$ MIC (Qa) ppm | Ascorbic Acid MIC (Qb) ppm | CIO$_2$: Ascorbic Acid Ratio | Synergy Index |
|---|---|---|---|---|---|
| 67.5 | 10000 | 135 | 78 | 1.73:1 | 2.01 |
| 67.5 | 10000 | 135 | 39 | 3.46:1 | 2.00 |
| 67.5 | 10000 | 135 | 156.3 | 1:1.16 | 2.02 |
| 67.5 | 10000 | 67.5 | 39 | 1.73:1 | 1.00 |

Example 5: Fermentation Lab Data

The samples tested and their concentrations can be found in Figure 1 and table 5. Three 160-gram slurries of corn flour, water and enzyme (30% w/w dry solids) were made for each treatment and control (inoculated and uninoculated). The slurries were incubated for 90 minutes at 83°C, cooled to 40°C, and then inoculated with *L. plantarum.* Next, the slurries were dosed with antimicrobial. At 15, 30 and 60 minutes posttreatment, samples were taken and tested for viability and sugars. All fermentation flasks were mixed for 20 minutes at 40°C then inoculated with *S. cerevisiae* and fermented at 32°C for 62 hours. Mass data was collected at 0, 17.5, 22.5, 42.5, 48 and 64 hours after inoculation with yeast. At the termination of the study, data concerning mass, sugars and products, dry solids, filtrate density, dissolved solids and bacterial count was gathered.

This example shows that during fermentation, 5 ppm of chlorine dioxide combined with 200 ppm of citric acid is effective in reducing bacteria, which was unexpectedly low after seeing the laboratory MIC and synergy data.

Table 5: Bacterial Count (CFU x 10$^6$)

| | 15 min | 30 min | 60 min | 62 hours |
|---|---|---|---|---|
| Control | 1.20 | 1.34 | 10.3 | 0.0556 |
| 5ppm CIO$_2$/ 200ppm citric acid | 1.18 | 1.55 | 3.62 | 0.0030 |

**Claims**

1.  Use of a combination of:

    (a) chlorine dioxide, and
    (b) at least one organic acid which is citric acid or its salt for controlling undesirable microorganism concentration in an aqueous system which is a biorefining system or industrial fermentation system, wherein the ratio of chlorine dioxide to organic acid is from 1:1 to 1:15'000;

    and wherein the chlorine dioxide is at a concentration of from 1 to 15 ppm in the aqueous system.

2.  The use of claim 1 wherein the ratio of chlorine dioxide to organic acid is from 1:1 to 1:2000.

3.  The use of claim 1 or 2 wherein the ratio of chlorine dioxide to citric acid is from 1:1 to 1:1000.

4.  The use of any of claims 1 to 3 wherein the chlorine dioxide is at a concentration of from 5 to 10 ppm in the aqueous system.

5.  The use of claim 1 wherein the citric acid is used in an amount of at least 200 ppm in the aqueous system.

6.  The use of claim 1 wherein the citric acid is used in an amount of at least 300 ppm in the aqueous system.

7. The use of claim 1 wherein the citric acid is used in an amount of 100 ppm to 6250 ppm in the aqueous system.

8. The use of claim 1 which is in a fermentation process during the propagation and/or conditioning stage.

9. A method of controlling undesirable microorganism concentration in an aqueous system which is a biorefining system or industrial fermentation system, the method comprising the steps of:

   (a) introducing chlorine dioxide into an aqueous system and
   (b) introducing an organic acid into the aqueous system,

   wherein the organic acid is citric acid or its salt and wherein the chlorine dioxide has a dosage rate of at least 1 ppm and up to 15 ppm in the aqueous system being treated and the ratio of chlorine dioxide to organic acid is from 1:1 to 1:15'000.

10. The method of claim 9 in which a ratio of chlorine dioxide to citric acid is from 1:4 to 1:1000, and the chlorine dioxide dosage rate is from 1 to 15 ppm chlorine dioxide, preferably from 5 to10 ppm chlorine dioxide.

11. The method of claim 9 wherein the citric acid is used in an amount of at least 200 ppm in the aqueous system.

12. The method of claim 9 wherein the citric acid is used in an amount of at least 300 ppm in the aqueous system.

13. The method of claim 9 wherein the citric acid is used in an amount of 100 ppm to 6250 ppm in the aqueous system.

14. The method of claim 9 wherein chlorine dioxide in conjunction with citric acid is added during propagation and/or conditioning.


**Patentansprüche**

1. Verwendung einer Kombination von

   (a) Chlordioxid und
   (b) zumindest einer organischen Säure, die Zitronensäure oder ihr Salz ist,

   zum Kontrollieren unerwünschter Mikroorganismenkonzentration in einem wässrigen System, das ein Bioraffineriesystem oder ein System zum industriellen Fermentieren ist, worin das Verhältnis von Chlordioxid zu organischer Säure von 1:1 bis 1:15000 beträgt, und
   worin das Chlordioxid in dem wässrigen System in einer Konzentration von 1 bis 15 ppm vorliegt.

2. Verwendung nach Anspruch 1, worin das Verhältnis von Chlordioxid zu organischer Säure von 1:1 bis 1:2000 beträgt.

3. Verwendung nach Anspruch 1 oder 2, worin das Verhältnis von Chlordioxid zu Zitronensäure von 1:1 bis 1:1000 beträgt.

4. Verwendung nach einem der Ansprüche 1 bis 3, worin das Chlordioxid in dem wässrigen System in einer Konzentration von 5 bis 10 ppm vorliegt.

5. Verwendung nach Anspruch 1, worin die Zitronensäure in dem wässrigen System in einer Menge von zumindest 200 ppm verwendet wird.

6. Verwendung nach Anspruch 1, worin die Zitronensäure in dem wässrigen System in einer Menge von zumindest 300 ppm verwendet wird.

7. Verwendung nach Anspruch 1, worin die Zitronensäure in dem wässrigen System in einer Menge von 100 ppm bis 6250 ppm verwendet wird.

8. Verwendung nach Anspruch 1, die in einem Fermentierverfahren während der Propagations- und/oder Konditionierstufe erfolgt.

**9.** Verfahren zum Kontrollieren einer unerwünschten Mikroorganismenkonzentration in einem wässrigen System, das ein Bioraffineriesystem oder ein System zum industriellen Fermentieren ist, wobei das Verfahren die Schritte umfasst des:

(a) Einführens von Chlordioxid in ein wässriges System und
(b) Einführens einer organischen Säure in das wässrige System,

worin die organische Säure Zitronensäure oder ihr Salz ist und worin das Chlordioxid eine Dosierungsrate von zumindest 1 ppm und bis zu 15 ppm in dem wässrigen System, das behandelt wird, aufweist und das Verhältnis von Chlordioxid zu organischer Säure von 1:1 bis 1:15000 beträgt.

**10.** Verfahren nach Anspruch 9, in dem ein Verhältnis von Chlordioxid zu Zitronensäure von 1:4 bis 1:1000 beträgt und die Dosierungsrate von Chlordioxid von 1 bis 15 ppm Chlordioxid, bevorzugt von 5 bis 10 ppm Chlordioxid, beträgt.

**11.** Verfahren nach Anspruch 9, worin die Zitronensäure in dem wässrigen System in einer Menge von zumindest 200 ppm verwendet wird.

**12.** Verfahren nach Anspruch 9, worin die Zitronensäure in dem wässrigen System in einer Menge von zumindest 300 ppm verwendet wird.

**13.** Verfahren nach Anspruch 9, worin die Zitronensäure in dem wässrigen System in einer Menge von 100 ppm bis 6250 ppm verwendet wird.

**14.** Verfahren nach Anspruch 9, worin Chlordioxid in Verbindung mit Zitronensäure während der Propagation und/oder dem Konditionieren zugegeben wird.


**Revendications**

**1.** Utilisation d'une combinaison de :

(a) dioxyde de chlore, et
(b) au moins un acide organique qui est l'acide citrique ou son sel pour le contrôle de la concentration en micro-organismes indésirables dans un système aqueux qui est un système de bioraffinage ou un système de fermentation industriel, dans lequel le rapport du dioxyde de chlore à l'acide organique est compris entre 1:1 et 1:15 000 ; et

dans lequel le dioxyde de chlore est à une concentration comprise entre 1 et 15 ppm dans le système aqueux.

**2.** Utilisation selon la revendication 1 dans lequel le rapport du dioxyde de chlore à l'acide organique est compris entre 1:1 et 1:2000.

**3.** Utilisation selon la revendication 1 ou la revendication 2 dans lequel le rapport du dioxyde de chlore à l'acide citrique est compris entre 1:1 et 1:1000.

**4.** Utilisation selon l'une quelconque des revendication 1 à 3 dans lequel le dioxyde de chlore est à une concentration comprise entre 5 et 10 ppm dans le système aqueux.

**5.** Utilisation selon la revendication 1 dans lequel l'acide citrique est utilisé dans une quantité d'au moins 200 ppm dans le système aqueux.

**6.** Utilisation selon la revendication 1 dans lequel l'acide citrique est utilisé dans une quantité d'au moins 300 ppm dans le système aqueux.

**7.** Utilisation selon la revendication 1 dans lequel l'acide citrique est utilisé dans une quantité comprise entre 100 ppm et 6250 ppm dans le système aqueux.

**8.** Utilisation selon la revendication 1 qui est dans un processus de fermentation pendant l'étape de propagation et/ou

**EP 2 967 042 B1**

de conditionnement.

9. Procédé de contrôle de la concentration en micro-organismes indésirables dans un système aqueux qui est un système de bioraffinage ou un système de fermentation industrielle, le procédé comprenant les étapes consistant à :

   (a) introduire du dioxyde de chlore dans un système aqueux et
   (b) introduire un acide organique dans le système aqueux,

   dans lequel l'acide organique est l'acide citrique ou son sel et dans lequel le dioxyde de chlore possède un taux de dosage compris entre au moins 1 ppm et 15 ppm dans le système aqueux étant traité et le rapport du dioxyde de chlore à l'acide organique est compris entre 1:1 et 1:15 000.

10. Procédé selon la revendication 9 dans lequel un rapport du dioxyde de chlore à la citrique est compris entre 1:4 et 1:1000, et le taux de dosage du dioxyde de chlore est compris entre 1 et 15 ppm de dioxyde de chlore, de préférence entre 5 et 10 ppm de dioxyde de chlore.

11. Procédé selon la revendication 9 dans lequel l'acide citrique est utilisé dans une quantité d'au moins 200 ppm dans le system aqueux.

12. Procédé selon la revendication 9 dans lequel l'acide citrique est utilisé dans une quantité d'au moins 300 ppm dans le system aqueux.

13. Procédé selon la revendication 9 dans lequel l'acide citrique est utilisé dans une quantité comprise entre 100 ppm et 6250 ppm dans le system aqueux.

14. Procédé selon la revendication 9 dans lequel le dioxyde de chlore en conjonction avec l'acide citrique est ajouté pendant la propagation et/ou le conditionnement.

EP 2 967 042 B1

FIG 1.

**Bacterial Concentration over Time After Antimicrobial Addition**

15

## REFERENCES CITED IN THE DESCRIPTION

**Patent documents cited in the description**

- WO 2007149450 A2
- US 20020053657 A1
- US 6071483 A
- US 20040231977 A1
- US 5165910 A

**Non-patent literature cited in the description**

- **H. KIM et al.** *Food Microbiology,* 2008, vol. 25, 964-969
- **F.C. KULL ; P.C. EISMAN ; H.D. SYLWESTROWKA ; R.L. MAYER.** *Applied Microbiology,* 1961, vol. 9, 538-541